# EUROPEAN PATENT APPLICATION

(11) **EP 3 800 107 A1**
(43) Date of publication of application: **07.04.2021**
(21) Application number: 19845514.9
(22) Date of filing: 05.07.2019
(51) Int. Cl.: B61L 27/00, B61L 25/02, G06Q 50/30

(54) **TRANSPORTATION CAPACITY ADJUSTMENT DEVICE, TRANSPORTATION CAPACITY ADJUSTMENT SYSTEM, AND TRANSPORTATION CAPACITY ADJUSTMENT METHOD**

(30) Priority: 03.08.2018 JP 2018146969
(71) Applicant: Hitachi, Ltd., Tokyo 100-8280 (JP)
(72) Inventor: TOMIYAMA, Tomoe, Tokyo 100-8280 (JP); YANO, Kojin, Tokyo 100-8280 (JP)
(74) Representative: Manitz Finsterwald Patent- und Rechtsanwaltspartnerschaft mbB
(86) International application number: PCT/JP2019/026851
(87) International publication number: WO 2020/026703

(57) **Abstract**

When there is a troubled section on one route, a transport capacity adjusting device 130 extracts a detour route connecting a first transfer station, which is included in a section from one end station on one route to a start station of the troubled section, and a second transfer station, which is included in a section from the other end station to an end station of the troubled section, by another route different from one route. The transport capacity adjusting device 130 specifies as a minimum vehicle operation increasable section connecting a first turnaround station, which is included in a section from one end station to a first transfer station on the other route, and a second turnaround station, which is included in a section from the other end station to a second transfer station on the other route and calculates an upper limit value of the number of vehicle operations that can be increased in the minimum vehicle operation increasable section. Then, the transport capacity adjusting device 130 determines a target increasing vehicle operation number in the minimum vehicle operation increasable section based on the upper limit value of the minimum vehicle operation increasable section and a movement demand of the troubled section.

## Description

### Technical Field

The present invention relates to a transport capacity adjusting device, a transport capacity adjusting system, and a transport capacity adjusting method.

### Background Art

PTL 1 discloses a technique which makes it possible to present an option for improving the total profit of a service provider or the total satisfaction of a user in consideration of future demand. According to PTL 1, first, it receives a boarding request including designation of a departure point and a destination point and generates feasible boarding operations for each vehicle according to a plurality of types of boarding forms (taxi, shared taxi, minibus, and the like). Next, for each subset which meets the predetermined conditions in the subset of the feasible boarding operation group, the selection probability of each boarding operation forming the subset is calculated and the expected value of the number of boarding requests received in the future is calculated. Further, based on the calculated selection probability and the expected value of the number of boarding requests, a subset to be presented for the boarding request is selected from the subsets satisfying the predetermined conditions.

According to the technique disclosed in PTL 1, it is possible to increase the number of extra transportation operations in accordance with a demand for movement.

### Citation List

### Patent Literature

PTL 1: JP-A-2016-85734

### Summary of Invention

### Technical Problem

However, the technique does not consider an upper limit value (capacity) of the transportation volume due to operational restrictions (track competition, line capacity, and the like) of transportation means. For example, in the case of a railway, it is naturally impossible to run a plurality of transport vehicles in parallel on one line and the number of transport vehicles which can run between stations is limited. Therefore, it is possible that the number of transportation operations which can actually be increased or more is calculated and it may take time for subsequent coordination between transportation companies.

An object of the invention is to provide a technique capable of increasing the number of vehicle operations according to an event which occurs in consideration of the capacity of a traffic route.

### Solution to Problem

A transport capacity adjusting device according to one embodiment of the invention is a transport capacity adjusting device for adjusting the number of operations of transport vehicles running on a plurality of routes which share a transfer station which includes a route calculation unit which extracts a detour route connecting a first transfer station, which is included in a section from one end station on one route to a start station of a troubled section, and a second transfer station, which is included in a section from the other end station on one route to an end station of the troubled section, by another route different from one route when there is the troubled section where the transport vehicles cannot operate on one route included in the plurality of routes, an adjustable range calculation unit which specifies a section of another route connecting a first turnaround station, which has a track record of turnaround of the transport vehicles included in a section from one end station to the first transfer station on the other route, and a second turnaround station, which has a track record of turnaround of the transport vehicles included in a section from the other end station to the second transfer station on the other route, as a minimum vehicle operation increasable section and calculates an upper limit value of the number of vehicle operations that can be increased in the minimum vehicle operation increasable section, and an adjustment amount determination unit which determines a target increasing vehicle operation number in the minimum vehicle operation increasable section based on the upper limit value of the minimum vehicle operation increasable section and a movement demand of the troubled section.

### Advantageous Effects of Invention

According to the invention, the minimum vehicle operation increasable section of another route running in parallel with the troubled section generated on one route is specified, and based on the maximum number of vehicle operations that can be increased in this minimum vehicle operation increasable section and the movement demand in the troubled section, the target increasing vehicle operation number in the minimum vehicle operation increasable section is determined. From this, it is possible to determine the number of vehicle operations to be increased according to the event that occurs, taking into consideration the capacity of the route.

### Brief Description of Drawings

[Fig. 1] Fig. 1 is a functional block diagram of a transport capacity adjusting system according to a first example of the invention.
[Fig. 2] Fig. 2 is a diagram illustrating a schematic hardware configuration of a transport capacity adjusting device of Fig. 1.
[Fig. 3] Fig. 3 is a functional block diagram of the transport capacity adjusting device of Fig. 1.
[Fig. 4] Fig. 4 is a diagram illustrating an example of transportation plan information.
[Fig. 5] Fig. 5 is a diagram illustrating an example of movement demand forecast information.
[Fig. 6] Fig. 6 is a flowchart illustrating an example of a transport capacity adjusting process performed by a planning unit of Fig. 3.
[Fig. 7] Fig. 7 is a diagram illustrating an example of a network model of a plurality of routes.
[Fig. 8] Fig. 8 is a diagram illustrating an example of a troubled section and a transferable point in the network model of the plurality of routes.
[Fig. 9] Fig. 9 is a diagram illustrating an example of a detour route in the network model of the plurality of routes.
[Fig. 10] Fig. 10 is a diagram illustrating an example of a minimum vehicle operation increasable section in the network model of the plurality of routes.
[Fig. 11] Fig. 11 is a diagram illustrating an example in which a planned operation schedule of the minimum vehicle operation increasable section is displayed on an output unit.
[Fig. 12] Fig. 12 is a diagram illustrating an example of an actual operation schedule in a peak time zone of the minimum vehicle operation increasable section.
[Fig. 13] Fig. 13 is a diagram illustrating an example of a planned operation schedule in a target time zone for increasing a transportation capacity in the minimum vehicle operation increasable section.
[Fig. 14] Fig. 14 is a diagram illustrating an example in which the troubled section, the minimum vehicle operation increasable section, and a target vehicle operation increase rate are displayed on a display unit overlaid on a route map.
[Fig. 15] Fig. 15 is a functional block diagram of a transport capacity adjusting system according to a second example of the invention.
[Fig. 16] Fig. 16 is a diagram illustrating an example in which a troubled section, a minimum vehicle operation increasable section, a target vehicle operation increase rate, and an actual operation increase rate are displayed on a display unit overlaid on a route map.
[Fig. 17] Fig. 17 is a functional block diagram of a transport capacity adjusting system according to a third example of the invention.

### Description of Embodiments

Hereinafter, embodiments of the invention will be described with reference to the drawings.

### First Example

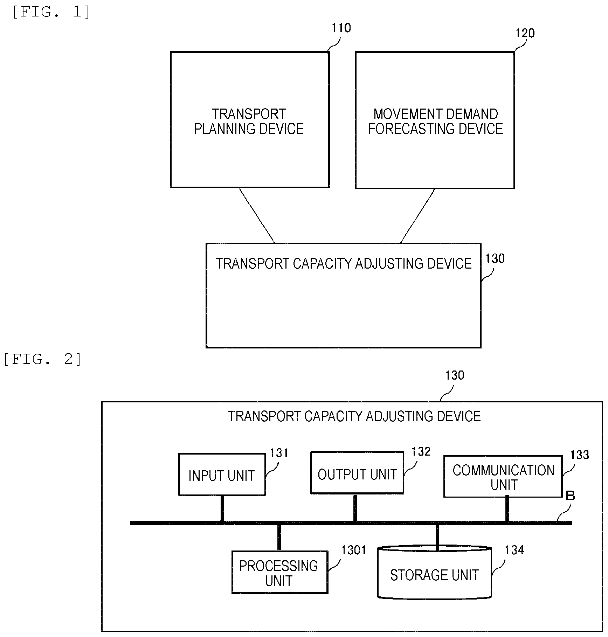

Fig. 1 illustrates a functional block diagram of a transport capacity adjusting system according to a first example of the invention. This transport capacity adjusting system is used for transport capacity adjustment by adjusting the number of trains, which are transportation vehicles running on a plurality of railway lines sharing a transfer station. In the specification, the term "station" includes a point where passengers can get on and off, as well as a point (for example, a vehicle depot) where a transportation vehicle can turn back.

The transport capacity adjusting system of Fig. 1 includes a transport planning device 110, a movement demand forecasting device 120, and a transport capacity adjusting device 130 and those are connected to each other by a communication line (not illustrated). The transport planning device 110 creates an operation planning schedule of trains, which are transportation vehicles running on each route. The movement demand forecasting device 120 predicts when, where, and how many passengers will travel using each route. The transport capacity adjusting device 130 determines the number of trains to be increased on the other routes used for detours when a troubled section in which trains cannot operate occurs on one of the plurality of routes.

The transport capacity adjusting device 130 will be described in detail below.

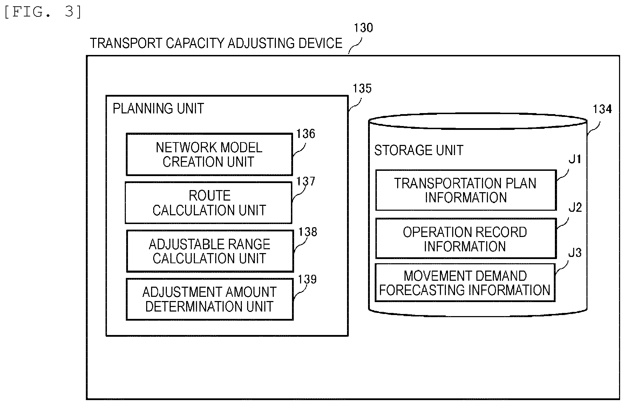

Fig. 2 is a diagram illustrating a schematic hardware configuration of the transport capacity adjusting device 130. Fig. 3 is a functional block diagram of the transport capacity adjusting device 130.

The transport capacity adjusting device 130 is composed of a well-known computer such as a personal computer or a server computer. As illustrated in Fig. 2, the transport capacity adjusting device 130 includes an input unit 131, an output unit 132, a communication unit 133, a storage unit 134, and a processing unit 1301 connected to each other by a bus B.

The input unit 131 is composed of, for example, a keyboard and a mouse and is an interface for a user to input an operation related to the transport capacity adjusting device 130.

The output unit 132 is composed of, for example, a display device and is an interface for displaying information regarding the transport capacity adjusting device 130.

The communication unit 133 is connected to a communication line (not illustrated) and is an interface for transmitting and receiving various information to and from the transport planning device 110, the movement demand forecasting device 120, and the like.

The storage unit 134 is composed of, for example, a hard disk device and non-volatilely stores various information including programs and data related to the transport capacity adjusting device 130. In the embodiment, the storage unit 134 stores a processing program which causes the processor of the processing unit 1301 described below to function as a planning unit 135 (Fig. 3). Further, the storage unit 135 stores transportation plan information J1 and operation record information J2 acquired from the transport planning device 110 through the communication unit 133. Further, the storage unit 135 stores movement demand forecasting information J3 acquired from the movement demand forecasting device 120 through the communication unit 133.

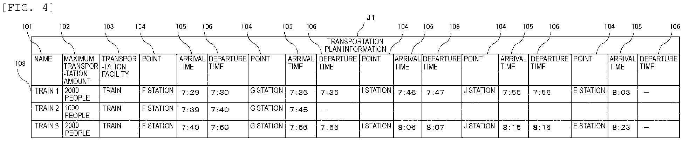

Fig. 4 is a diagram illustrating an example of the transportation plan information J1. The transportation plan information J1 is created for each operating vehicle service 108 of the train. The transportation plan information J1 includes a name 101 of the operating vehicle service 108, a maximum transportation amount 102 which is the transportable amount by the operating vehicle service 108, and a transportation facility 103 (for example, "train", "bus", and the like) which is the type of the transport vehicle in the operating vehicle service 108. Further, the transportation plan information J1 includes the number of points 104 (for example, station names) at which the operating vehicle service 108 stops, arrival times 105 at the points 105, and departure times 106 from the point 105, as many as the number of points 104 where the operating vehicle service 108 stops. The operation record information J2 has the same configuration as the transportation plan information J1.

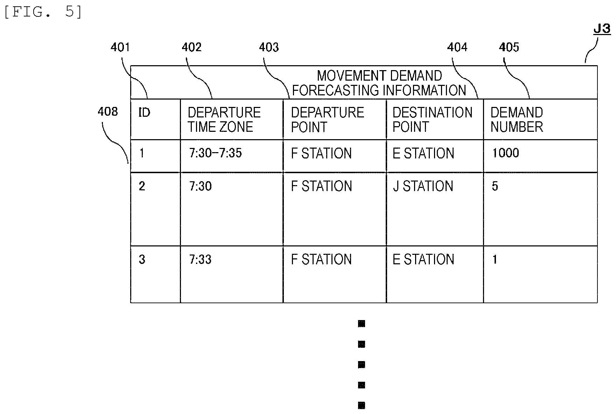

Fig. 5 is a diagram illustrating an example of the movement demand forecasting information J3. The movement demand forecast information J3 is created for a forecast unit 408, which is distinguished by the distance between stations and the departure time zone of a plurality of routes. The movement demand forecast information J3 includes an ID 401 which identifies the forecast unit 408, a departure time zone 402, a departure point 403 and a destination point 404 (for example, a station name), and a demand number 405 that is predicted to move from the departure point 403 to the destination point 404.

Returning to Fig. 2, the processing unit 1301 has, for example, a processor composed of a Central Processing Unit (CPU) and a Random Access Memory (RAM) used as a work area of the processor. The processing unit 1301 performs various information processing by executing various processing programs stored in the storage unit 134 by the processor. In the embodiment, the processing unit 1301 functions as the planning unit 135 (Fig. 3) by executing the processing program.

The planning unit 135 has a function of determining a target increasing vehicle operation number on the other routes used for detours when a troubled section occurs on one of the plurality of routes by adjusting the number of operating transportation vehicles (trains) running on a plurality of routes which share a transfer station. As illustrated in Fig. 3, the planning unit 135 includes a network model creation unit 136, a route calculation unit 137, an adjustable range calculation unit 138, and an adjustment amount determination unit 139.

The network model creation unit 136 creates a network model in which each station included in a plurality of routes is set as a node and each node corresponding to each station is connected by a link along the line.

When there is a troubled section where trains cannot operate on one route included in a plurality of routes, the route calculation unit 137 extracts a detour route connecting a first transfer station, which is included in a section from one end station on one route to a start station of the troubled section, and a second transfer station, which is included in a section from the other end station on one route to an end station of the troubled section, by another route different from one route.

In particular, when it is proceed from the end station of the troubled section toward the other end station of one route and detects the second transfer station shared with the other route, if it is possible to reach the first transfer station included in a section from one end station on one route to the start station of the troubled section by passing through the other route from the second transfer station, the route calculation unit 137 extracts a section connecting the first transfer station and the second transfer station on another route as a detour route. By doing so, the detour route can be extracted with a relatively simple process.

The adjustable range calculation unit 138 specifies the section of another route connecting a first turnaround station, which has a track record of turnaround of trains included in the section from one end station to the first transfer station on the other route, and a second turnaround station, which has a track record of turnaround of trains included in the section from the other end station to the second transfer station on the other route, as a minimum vehicle operation increasable section. Then, the adjustable range calculation unit 138 calculates an upper limit value of the number of vehicle operations that can be increased in the minimum vehicle operation increasable section.

The adjustable range calculation unit 138 preferably calculates the upper limit value based on the operation record in the minimum vehicle operation increasable section. Also, it is more preferable that the adjustable range calculation unit 138 calculates the upper limit value based on the operation record in the time zone (peak time zone) in which the number of operating vehicle services in the minimum incrementable section is maximum. By doing so, since the amount of transportation capacity that can be increased is calculated based on the actual vehicle operation record, the calculation can be easily performed without acquiring the internal information of the railway system or the current state information of the railway system. In particular, it is possible to calculate the realistic maximum increase in transportation capacity based on the operation record during the peak time zone.

The adjustment amount determination unit 139 determines the target increasing vehicle operation number in the minimum vehicle operation increasable section based on the above upper limit value of the minimum vehicle operation increasable section and the movement demand of the troubled section. In the embodiment, the adjustment amount determination unit 139 allocates the movement demand of the troubled section to the detour route based on the movement utility of the detour route. Then, the adjustment amount determination unit 139 determines the target increasing vehicle operation number in the minimum vehicle operation increasable section within a range not exceeding the upper limit value of the minimum vehicle operation increasable section. By doing so, since the movement demand is assigned to the detour route based on the movement utility, it is possible to increase the transportation capacity that appropriately covers the detour behavior of the movement demand.

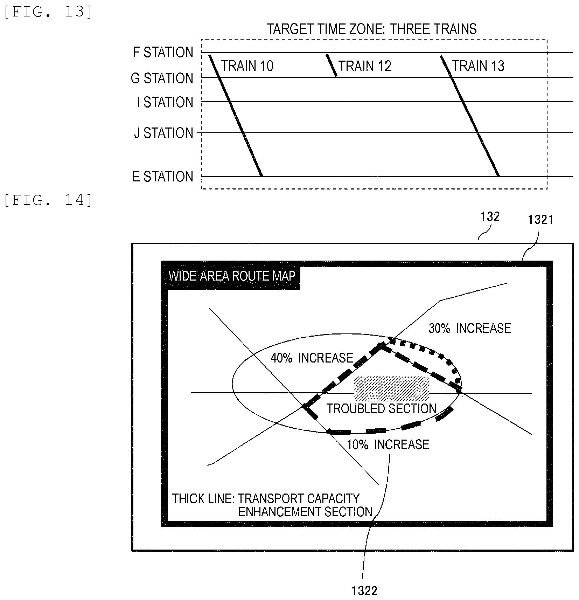

The planning unit 135 displays a route map 1321 which illustrates the troubled section and the minimum vehicle operation increasable section in the output unit 132 in an identifiable manner (Fig. 14). In the example of Fig. 14, the troubled section is shaded and the minimum vehicle operation increasable section is shown by the dashed line. Further, the planning unit 135 displays a target vehicle operation increase rate 1322 as information related to the target increasing vehicle operation number in the minimum vehicle operation increasable section on the display unit 132. By doing so, it is possible to visually grasp the troubled section and the minimum vehicle operation increasable section.

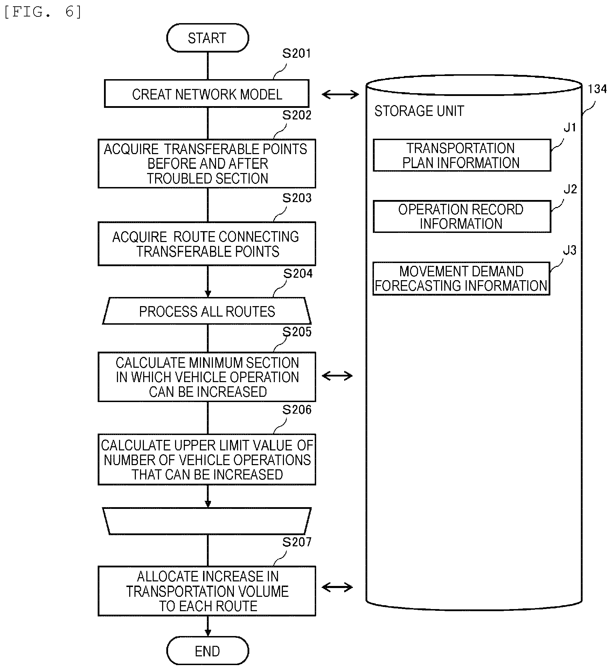

Fig. 6 is a flowchart of the transport capacity adjustment process. The transportation adjustment process performed by the planning unit 135 will be described with reference to the flowchart of Fig. 6.

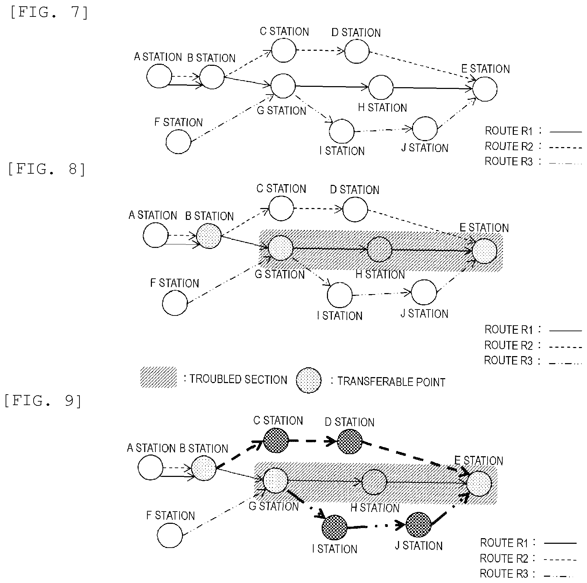

For example, based on the information entered in the input unit 131 or the information notified through the communication unit 133, when it is detected that a troubled section occurs on the route R1 of a plurality of routes (referred to as railway routes R1, R2, and R2 in this embodiment), as illustrated in Fig. 7, the planning unit 135 creates a network model of the plurality of routes R1, R2, and R3 (S201). The route R1 is indicated by a solid line arrow, the route R2 is indicated by a dashed arrow, and the route R3 is indicated by a two-dot chain arrow. A network model may be created in advance and stored in the storage unit 134. In this embodiment, the route R1 as one route connects A station → B station → G station → H station → E station. The route R2 as another route connects A station → B station → C station → D station → E station. The route R3, which is another route, connects F station → G station → I station → J station → E station. The troubled section is a section between G station and E station on the route R1.

Next, the planning unit 135 acquires transferable points before and after the troubled section on the route R1 (S202). Specifically, a first transfer station shared with the route R2 and R3 and included in the section from A station, which is one end station on the route R1, to G station, which is a starting station of the troubled section, is searched. By this search, B station and G station are acquired as the first transfer station. In addition, a second transfer station shared with the routes R2 and R3 and included in the section from E station, which is the other end station on the route R1, to E station, which is an end station of the troubled section, is searched. By this search, E station is acquired as the second transfer station. Fig. 8 illustrates the troubled section (G station - H station - E station) and the acquired transferable points, the first transfer station (B station, G station) and the second transfer station (E station) in the network model. The troubled section is shaded around the section and the transferable points are indicated by the shaded circles indicating the stations.

Next, the planning unit 135 acquires the route connecting the first transfer station and the second transfer station acquired in S202 (S203). Specifically, it is confirmed whether it is possible to reach the first transfer station from the second transfer station through the routes R2 and R3 which are connected to it. In this example, since it is possible to reach B station, which is the first transfer station, from E station, which is the second transfer station, through the route R2, the section from B station to E station on the route R2 is acquired as a detour route. In addition, since it is possible to reach the first transfer station, G station, from the second transfer station, E station, through the route R3, the section from G station to E station on the route R3 is acquired as a detour route. Fig. 9 illustrates the acquired detour routes (B station - C station - D station - E station, G station - I station - J station - E station) in the network model. S202 and S203 are route calculation steps.

Next, for all the detour routes acquired in S203 (loop processing in S204), the planning unit 135 acquires a minimum vehicle operation increasable section which includes a detour route and can be turned back at both ends on the routes R2 and R3, which are other routes that do not include the troubled section (S205), and then the planning unit 135 calculates the upper limit value of the number of vehicle operations that can be increased in the acquired minimum vehicle operation increasable section (S206).

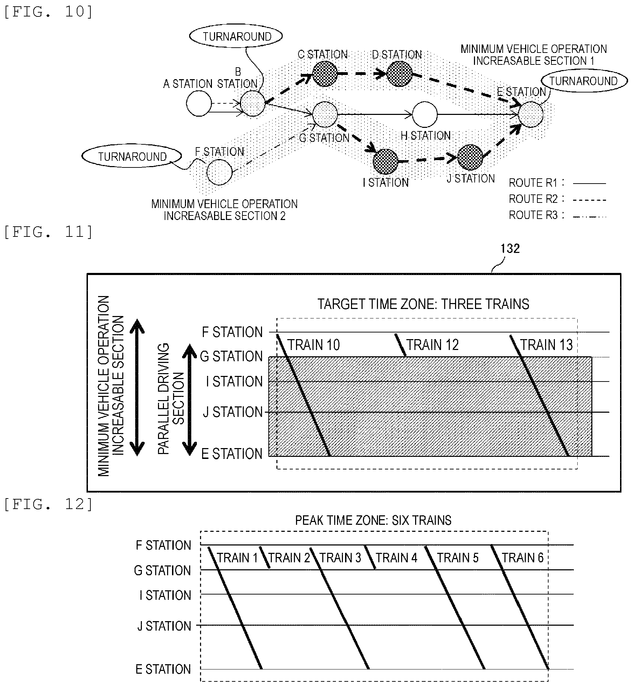

Specifically, first, a first turnaround station, which has a track record of turnaround of trains included in the section from one end station to the first transfer station on the other route and a second turnaround station, which has a track record of turnaround of trains included in the section from the other end station to the second transfer station on the other route are acquired. Refer to the operation record information J2 for the turnaround record at each station. Then, the section of the other route connecting the first turnaround station and the second turnaround station is specified as the minimum vehicle operation increasable section. In this example, B station on the route R2 is acquired as the first turnaround station, E station on the route R2 is acquired as the second turnaround station, and the section from B station to E station is acquired as a minimum vehicle operation increasable section 1 on the route R2. In addition, F station on the route R3 is acquired as the first turnaround station, E station on the route R3 is acquired as the second turnaround station, and the section from F station to E station is acquired as a minimum vehicle operation increasable section 2 on the route R3. Fig. 10 illustrates the acquired minimum vehicle operation increasable section (B station - C station - D station - E station, F station - G station - I station - J station - E station) in the network model. Further, Fig. 11 illustrates an example in which a planned operation schedule of the minimum vehicle operation increasable section 2 on the route R3 is displayed on the output unit 132. In Fig. 11, the minimum vehicle operation increasable section is F station - G station - I station - J station - E station, and a parallel driving section running in parallel with the troubled section of the route R1 is G station - I station - J station - E station. In Fig. 11, the parallel driving section is shaded and the target time zone in which the increase in vehicle operations should be considered is surrounded by a broken line.

Next, the number of operating vehicle services (actual value) of trains during the peak time zone such as the morning commuting time zone of the day in the minimum vehicle operation increasable section and the number of operating vehicle services (planned value) of trains operating during the target time zone in the minimum vehicle operation increasable section are acquired, and then the differences of them are used as the upper limit value of the number of vehicle operations that can be increased in the minimum vehicle operation increasable section. The number of operating vehicle services for trains during the peak time zone is acquired by referring to the operation record information J2 and the number of operating vehicle services during the target time zone is acquired by referring to transportation plan information J1. For example, in the minimum vehicle operation increasable section 2 on the route R3, the number of operating vehicle services during the peak time zone is six (train 1 to train 6) as illustrated in Fig. 12 and the number of operating vehicle services during the target time zone is three (train 10 to train 13) as illustrated in Fig. 13. Here, the operating vehicle service that runs only a part (from F station to G station) of the minimum vehicle operation increasable section 2 is also counted as the number of operating vehicle services. This is because, for the operating vehicle service that runs only a part of the minimum vehicle operation increasable section, it is considered that the running section can be extended to the entire minimum vehicle operation increasable section. Then, by subtracting the number of operating vehicle services (three) during the target time zone from the number of operating vehicle services (six) during the peak time zone, the upper limit value (three) of the number of vehicle operations that can be increased in the minimum vehicle operation increasable section 2 is calculated. The upper limit value is calculated in the same manner for the minimum vehicle operation increasable section 1 on the route R2. S204 to S206 are adjustable range calculation steps.

Next, the planning unit 135 determines the target increasing vehicle operation number in the minimum vehicle operation increasable section after completing the above processing for all the detour routes (S207). Specifically, the number of passengers (predicted value) scheduled to move in the troubled section on the route R1 is acquired by referring to the movement demand forecasting information J3. Next, for the detour routes included in each minimum vehicle operation increasable section, the above number of passengers is distributed according to the travel utility derived from the cost such as boarding time and fare, and then based on the number of passengers distributed, the target increasing number of vehicle operations (target increasing vehicle operation number) in each minimum vehicle operation increasable section is determined within a range that does not exceed the upper limit value. Then, based on the number of operating vehicle services in the target time zone and the target increasing vehicle operation number, the target vehicle operation increase rate in the minimum vehicle operation increasable section in the target time zone is calculated. S207 is an adjustment amount determination step.

Then, as illustrated in Fig. 14 as an example, the planning unit 135 makes the output unit 132 display the troubled section (shaded) and the minimum vehicle operation increasable section (thick line), which is a transport capacity enhancement section, in a superimposing manner on the route map 1322 including each route. Further, the planning unit 135 makes the output unit 132 display the target vehicle operation increase rate 1322, which is the information related to the target increasing vehicle operation number in the minimum vehicle operation increasable section, so as to be adjacent to the minimum vehicle operation increasable section. In addition to the target vehicle operation increase rate 1322, the actual vehicle operation increase rate indicating the actual increase rate of the vehicle operations may be displayed on the display unit 132. Further, instead of the target vehicle operation increase rate, the target increasing vehicle operation number may be displayed. The actual vehicle operation increase rate is calculated based on the latest operation record information J2. In this example, the target vehicle operation increase rate 1322 is the ratio of the target increasing vehicle operation number to the number of operating vehicle services (planned value) in the target time zone. The same applies to the actual vehicle operation increase rate. Then, the processing of the flowchart illustrated in Fig. 6 is finished.

As described above, according to the transport capacity adjusting device 130 of the example, the minimum vehicle operation increasable section of another route (route R2, R3) running in parallel with the troubled section generated on one route (route R1) is specified, and based on the maximum number of vehicle operations that can be increased in this minimum vehicle operation increasable section and the movement demand in the troubled section, the target increasing vehicle operation number in the minimum vehicle operation increasable section is determined. From this, it is possible to determine the number of vehicle operations to be increased according to the event that occurs, taking into consideration the capacity of the route.

### Second Example

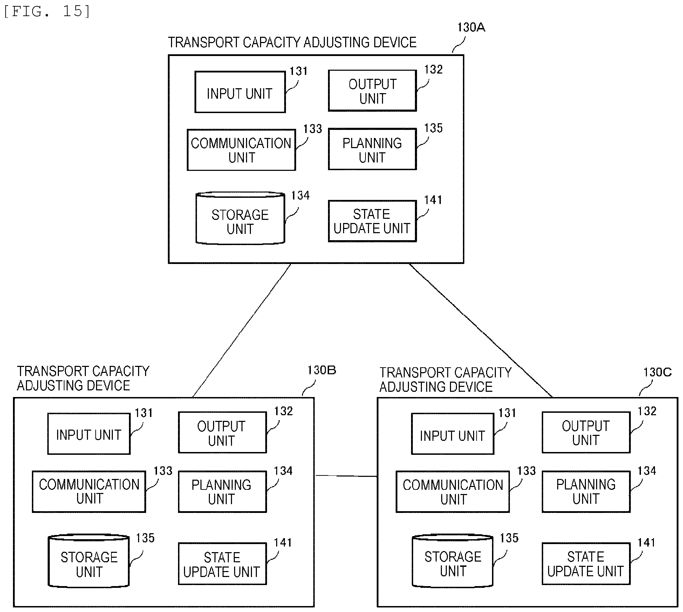

Fig. 15 illustrates a functional block diagram of a transport capacity adjusting system according to a second example of the invention. Similar to the first example, this transport capacity adjusting system is used for adjusting the transport capacity by adjusting the number of operations of trains, which are transport vehicles running on a plurality of railway routes sharing a transfer station. In this example, the routes R1, R2, and R3 are operated by different railway companies and respective railway companies have transport capacity adjusting devices 130A to 130C corresponding to the routes R1, R2, and R3. Respective railway companies independently operate the transport capacity adjusting devices 130A to 130C and the transport capacity adjusting devices of respective railway companies cooperate with one another. The transport capacity adjusting devices 130A to 130C have an additional state update unit 141, and other than that, each of the transport capacity adjusting devices 130A to 130C has the same configuration as the transport capacity adjusting device 130 of the first example.

The state update unit 141 acquires the target vehicle operation increase rate (information related to the target increasing vehicle operation number) in the minimum vehicle operation increasable section determined in other transport capacity adjusting devices and the actual vehicle operation increase rate (information related to the actual increasing vehicle operation number). By doing so, the status of increased vehicle operations can be shared among a plurality of railway companies and the status of other routes can be grasped more accurately.

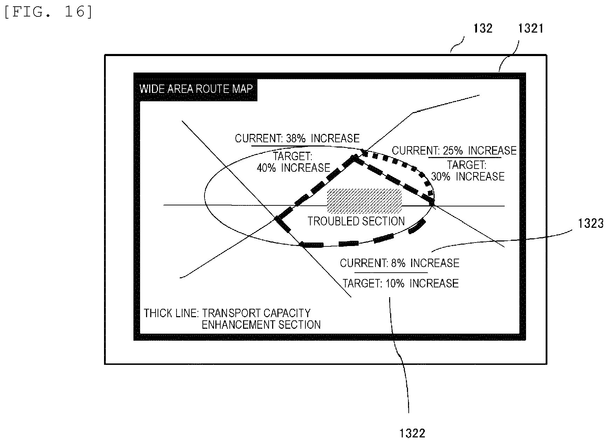

As illustrated in Fig. 16 as an example, the transport capacity adjusting devices 130A to 130C make the display unit 132 display the target vehicle operation increase rate 1322 and the actual vehicle operation increase rate 1323 acquired from another transport capacity adjusting device by the state update unit 141.

### Third Example

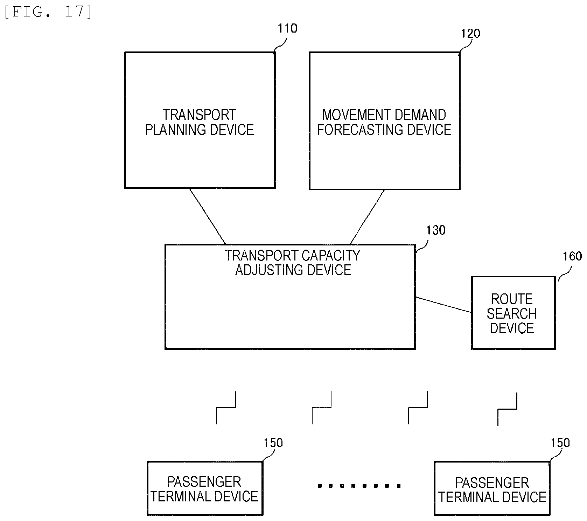

Fig. 17 illustrates a functional block diagram of the transport capacity adjusting system according to a third example of the invention. This transport capacity adjusting system includes a transport planning device 110, a movement demand forecasting device 120, a transport capacity adjusting device 130, a passenger terminal device 150, and a route search device 160. Those are connected to each other by a wired or wireless communication line.

The transport planning device 110, the movement demand forecasting device 120, and the transport capacity adjusting device 130 have the same configurations as those in the first example.

The passenger terminal device 150 is composed of a smartphone, a tablet, a personal computer, or the like, and is used for a railway route search. The passenger terminal device 150 transmits the route search condition input by a user to the route search device 160 and displays the route search result received from the route search device 160 to the user.

The route search device 160 performs a route search process based on the route search condition received from the passenger terminal device 150 and transmits the search result to the passenger terminal device 150. Further, the route search device 160 acquires the target vehicle operation increase rate (information related to the target increasing vehicle operation number) in the minimum vehicle operation increasable section from the transport capacity adjusting device 130, and then the route search device 160 transmits the target vehicle operation increase rate to the passenger terminal device 150 together with the result of the route search. By doing so, the passenger terminal device 150 displays the target vehicle operation increase rate together with the route search result, in such a manner that, when a troubled section occurs, it is possible to grasp the increase in vehicle operations on other routes. As a result, it is possible to assist a user so that an appropriate route can be selected.

The embodiments of the invention described above are examples for the purpose of explaining the invention and the scope of the invention is not limited to those embodiments. One of ordinary skill in the art can practice the invention in various other aspects without departing from the scope of the invention.

### Reference Signs List

110: transport planning device
120: movement demand forecasting device
130, 130A, 130B, 130C: transport capacity adjusting device
1301: processing unit
131: input unit
132: output unit
133: communication unit
134: storage unit
135: planning unit
136: network model creation unit
137: route calculation unit
138: adjustable range calculation unit
139: adjustment amount determination unit
141: state update unit
150: passenger terminal device
160: route search device

## Claims

1. A transport capacity adjusting device for adjusting the number of operations of transport vehicles running on a plurality of routes which share a transfer station, comprising:
a route calculation unit which extracts a detour route connecting a first transfer station, which is included in a section from one end station on one route to a start station of a troubled section, and a second transfer station, which is included in a section from the other end station on one route to an end station of the troubled section, by another route different from one route when there is the troubled section where the transport vehicles cannot operate on one route included in the plurality of routes;
an adjustable range calculation unit which specifies a section of another route connecting a first turnaround station, which has a track record of turnaround of the transport vehicles included in a section from one end station to the first transfer station on the other route, and a second turnaround station, which has a track record of turnaround of the transport vehicles included in a section from the other end station to the second transfer station on the other route, as a minimum vehicle operation increasable section and calculates an upper limit value of the number of vehicle operations that can be increased in the minimum vehicle operation increasable section; and
an adjustment amount determination unit which determines a target increasing vehicle operation number in the minimum vehicle operation increasable section based on the upper limit value of the minimum vehicle operation increasable section and a movement demand of the troubled section.

2. The transport capacity adjusting device according to Claim 1, wherein
the adjustable range calculation unit calculates the upper limit value based on an operation record in the minimum vehicle operation increasable section.

3. The transport capacity adjusting device according to Claim 2, wherein
the adjustable range calculation unit calculates the upper limit value based on an operation record in a time zone when the number of operating vehicle services in the minimum incrementable section is maximum.

4. The transport capacity adjusting device according to Claim 1, wherein
when it is proceed from the end station of the troubled section toward the other end station of one route and detects a transfer station shared with other route, if it is possible to reach the transfer station included in a section from one end station on one route to the start station of the troubled section by passing through the other route from the transfer station, the route calculation unit sets the former transfer station as the second transfer station, sets the latter transfer station as the first transfer station and extracts a section connecting the first transfer station and the second transfer station on the other route as a detour route.

5. The transport capacity adjusting device according to Claim 1, wherein
the adjustment amount determination unit allocates the movement demand of the troubled section to the detour route based on movement utility of the detour route and determines a target increasing vehicle operation number in the minimum vehicle operation increasable section within a range not exceeding the upper limit value of the minimum vehicle operation increasable section.

6. The transport capacity adjusting device according to Claim 1, further comprising:
an output unit which displays a route map which illustrates the troubled section and the minimum vehicle operation increasable section in an identifiable manner.

7. The transport capacity adjusting device according to Claim 6, wherein
the output unit displays information related to the target increasing vehicle operation number in the minimum vehicle operation increasable section.

8. A transport capacity adjusting system comprising a plurality of transport capacity adjusting devices according to Claim 7, wherein
the transport capacity adjusting device comprises a state update unit which acquires at least one of information related to a target increasing vehicle operation number in the minimum vehicle operation increasable section determined in another transport capacity adjusting device and information related to an actual number of vehicle operations increased in the minimum vehicle operation increasable section.

9. A transport capacity adjusting system comprising the transport capacity adjusting device according to any one of Claims 1 to 7 and a route search device which performs a route search based on a search condition input from a passenger terminal device, wherein
the route search device acquires information related to a target increasing vehicle operation number in the minimum vehicle operation increasable section from the transport capacity adjusting device and transmits information related to a target increasing vehicle operation number in the minimum vehicle operation increasable section transmitted from the transport capacity adjusting device together with a result of the route search to the passenger terminal device.

10. A transport capacity adjusting method for adjusting the number of operations of transport vehicles running on a plurality of routes which share a transfer station, comprising:
extracting a detour route connecting a first transfer station, which is included in a section from one end station on one route to a start station of a troubled section, and a second transfer station, which is included in a section from the other end station on one route to an end station of the troubled section, by another route different from one route when there is the troubled section where the transport vehicles cannot operate on one route included in the plurality of routes;
specifying a section of another route connecting a first turnaround station, which has a track record of turnaround of the transport vehicles included in a section from one end station to the first transfer station on the other route, and a second turnaround station, which has a track record of turnaround of the transport vehicles included in a section from the other end station to the second transfer station on the other route, as a minimum vehicle operation increasable section and calculating an upper limit value of the number of vehicle operations that can be increased in the minimum vehicle operation increasable section; and
determining a target increasing vehicle operation number in the minimum vehicle operation increasable section based on the upper limit value of the minimum vehicle operation increasable section and a movement demand of the troubled section.
